Europäisches Patentamt

European Patent Office

Office européen des brevets

(19)

(11) **EP 0 639 601 B2**

(12) **NEW EUROPEAN PATENT SPECIFICATION**

(45) Date of publication and mention
of the opposition decision:
**21.08.2002 Bulletin 2002/34**

(45) Mention of the grant of the patent:
**30.09.1998 Bulletin 1998/40**

(21) Application number: **94109443.5**

(22) Date of filing: **18.06.1994**

(51) Int Cl.$^7$: **C08G 63/183**, C08L 67/02

(54) **Polybutylene terephthalate as well as articles manufactured from the said material**

Polybutylenterephthalat und aus diesem Material hergestellte Gegenstände

Polytéréphtalate de butylène et articles produits à partir de ce matériau

(84) Designated Contracting States:
**DE ES FR GB IT NL**

(30) Priority: **16.08.1993 NL 9301412**

(43) Date of publication of application:
**22.02.1995 Bulletin 1995/08**

(73) Proprietor: **GENERAL ELECTRIC COMPANY
Schenectady, NY 12345 (US)**

(72) Inventors:
• **Van Beek, Franciscus Johannes Maria
NL-4600 AC Bergen op Zoom (NL)**
• **Roovers, Wilhelmus Marinus Maria
NL-4600 AC Bergen op Zoom (NL)**
• **Van Ende, Patrick Carolus Juliette
NL-4600 AC Bergen op Zoom (NL)**

(74) Representative: **Grever, Frederik et al
General Electric Plastics B.V.
P.O. Box 117
4600 AC Bergen op Zoom (NL)**

(56) References cited:
EP-A- 0 324 065          EP-A- 0 373 465
EP-A- 0 378 884          EP-A- 0 552 546
FR-A- 2 070 751

EP 0 639 601 B2

## Description

Polybutylene terephthtalates (PBT) are suitable, inter alia, for motor-car parts, for example, bumpers, due to the good mechanical properties and the resistance to organic solvents. However, the said materials show inadequacies as regards the bonding for lacquers, both lacquer systems on a water basis and lacquer systems based on organic solvents.

The invention relates to articles formed from a polybutylene terephthalate having a content of terminal COOH groups of less than 30 meq/kg and a number-averaged molecular weight (Mn) of at least 30,000, determined with respect to polystyrene as a standard and comprising one or more layers of a lacquer coating.

It is known to the Applicants that a polybutlene terephthalate having a content of terminal COOHG groups of 30 meg/kg and a number-averaged molecular weight Mn of 26,000 is commercially available. However, as far as is known, articles which are provided with a lacquer layer are not formed from this material. EP A 0 378 884 describes polybutylene terephthalates with an I.V. of more than 0.80 dl/g and with carboxyl end group contents between 7 and 23 meg/g.

It has been found that polybutylene terephthalate having a content of terminal COOH groups and a Mn value as mentioned hereinbefore, shows an excellent bonding for lacquer. This applies both to lacquer systems on a water basis and to lacquer systems on the basis of an organic solvent, while in addition other properties, for example, the mechanical properties, are excellent.

The Mn value is preferably at least 35,000 and the content of terminal COOH groups is preferably less than 25 meq/kg. Generally, the smaller the content of terminal COOH groups, the better the lacquer bonding proves to be.

Polybutylene terephthalate is derived from butane-1,4-diol and terephtalic acid. It is possible to use in the polymer mixtures copolyesters in which a part of the diol compound and/or a part of the terephtalic acid is replaced by another diol and/or carbolic acid. For the polymer mixtures according to the invention it is recommendable to use a polybutylene terephthalate which is built up for more than 70 mol.% from units derived from butane-1,4-diol and terephthalic acid. Polybutylene terephthalate (PBT) is to be understood to mean in this Patent Application both a homopolyester and copolyester. It is also possible to use for example, a glycol having three or more hydroxyl groups or a trivalent or polyvalent carboxylic acid has been incorporated.

For the preparation of the PBT materials according to the invention which comprise a comparatively low content of terminal COOH groups and hence a comparatively high content of terminal OH groups it holds that lower temperatures and shorter reaction times lead to a lower terminal COOH content. Furthermore, longer reaction times give a higher content of terminal COOH groups and a higher molecular weight. A higher molecular weight can also be realised by a lower pressure.

Four PBT materials according to the invention having a comparatively low content of terminal COOH groups, as well as two other PBT materials not within the scope of this invention and which had a comparatively high content of terminal COOH groups were prepared.

For the PBT synthesis 11.7 kg of dimethyl terephthalate, 8.1 kg of butanediol and 17 ml of 2-ethyl hexyl titanate were provided in a reactor which comprised a stirrer, a cooler, a nitrogen gas inlet, and a pressure control system. The reaction mixture was heated at approximately 150-220 oC and the developed methanol was drained at the top of the reactor. The reaction mixture was further heated to the desired ultimate polymerisation temperature (approximately 240-265 °C) while reducing the pressure of the system. The combination of the ultimate pressure and the temperature, as well as the reaction time, mainly determine the concentrations of the terminal groups (-COOH) and -OH). The molecular weight may be varied by the reaction time.

The PBT-materials which do not fall within the scope of the present invention and in this case only serve as comparative materials, are referred to as PBT-Verg.A and PBT-Verg.B. PBT-Verg.A had an Mn value of 36,700 and a content of terminal COOH groups of 52 meq/kg. PBT-Verg.B had an Mn value of 44,000 and a content of terminal COOH groups of 42 meq/kg. PBT-Verg.A and PBT-Verg.B were prepared according to the above-described general method at a reduced pressure of 800 Pa and approximately 10 Pa, respectively, and an ultimate polymerisation temperature of 255 °C. In the case of PBT-Verg.A the total reaction time was 4 hours and 3 minutes and in the case of PBT-Verg.B it was 2 hours and 37 minutes. For the preparation of the materials according to the invention (PBT-1, PBT-2, PBT-3) the polymerisation temperature was 245 °C, 245 °C and 255 °C, respectively, the pressure was 270 Pa, 530 Pa and 800 Pa, respectively, and the overall reaction time was 2 hours and 46 minutes, 3 hours and 57 minutes and 3 hours and 28 minutes, respectively.

When comparing the preparation conditions of on the one hand PBT-Verg.A and on the other hand PBT-1 the lower reaction temperature (245 °C v. 255 °C) and shorter reaction time (2 hours and 46 minutes v. 4 hours and 3 minutes) have been found to result in a clearly lower content of terminal COOH groups.

The molecular weights of PBT-1 and PBT-Verg.A are substantially equal: although in the preparation of PBT-1 the pressure (270 Pa) is lower than in the preparation of PBT-Verg.A (800 Pa), which in itself would lead to a higher molecular weight for PBT-1, the reaction time in the case of the preparation of PBT-1 is much shorter.

When comparing the preparation conditions of on the one hand PBT-Verg.A and on the other hand PBT-2 the lower content of PBT-2 of terminal -COOH is explained by the lower temperature in the case of the preparation of PBT-2 (245 oC v. 255 oC) (the reaction times are of the same order of magnitude).

When comparing the preparation conditions of PBT-Verg.A and PBT-3 it is found that the reaction temperature and reaction pressure are the same and that in the case of PBT-3 the content of terminal -COOH groups is smaller due to the shorter reaction time. ( In spite of the longer reaction time, the molecular weight of PBT-Verg.A is slightly lower than that of PBT-3, which is caused by chain decomposition with this longer reaction time.)

The comparatively high molecular weight of 44,000 in the case of PBT-Verg.B is caused by the very low pressure (approximately 10 Pa).

PBT-4 was obtained by post-condensation in solid state of a PBT having a number-averaged molecular weight of 25,000 and a content of COOH-groups of 28 meg/kg.

## Quantitative determination of the number of terminal COOH groups

The sample is dissolved under reflux in a mixture of o.cresol and dichloromethane (75/25). After cooling to room temperature the terminal carboxyl groups are titrated with 0.02 N tetrabutyl ammonium hydroxide. The conversion point is determined potentiometrically. The quantity of terminal carboxyl groups (RS1) is expressed in milli-equivalents per kilogram. The following formula is used:

$$RS1 = (EP1-C30)xC31x1000/COO$$

EP1 =    ml of titration agent to conversion point
C30 =    ml of o.cresol, blank determination
C31 =    normality of the titration agent
COO =    quantity of sample in grammes.

## Determination of the molecular weight (Mn)

The molecular weight was determined by GPC (**G**el **P**ermeation **C**hromatography) against polystyrene calibrated as a standard.

The PBT materials, after having been processed to an extrudate in a Werner-Pfleiderer extruder and chopping up to grains, were formed to sheets of 175 x 175 x 3 mm (l x w x t); with these sheets the lacquer bonding was determined in the experiments described hereinafter.

The following lacquer systems and lacquer conditions were used:

1) Akzo 03-79541 (indication commercial product) with hardener 07-20810 (a mono-layer system). This lacquer system is composed on the basis of a solvent. The lacquer is provided in one layer in a thickness of approximately 15-20 micrometres, after which the lacquered sheet was shelved in a dust-free cupboard at room temperature for 5-10 minutes ("flash-off"). Hardening at 80 oC for 30 minutes was finally carried out.

2) A three-layer system of Wörwag:

a) R 1300, a basic layer composition on a water basis, provided in a layer thickness of approximately 20-30 micrometres; 5 minutes flash-off; 15 minutes curing at 80 °C.

b) R 62612 ("Altograu") diluted with 63817, a coating material on a solvent basis. Provided in a layer thickness of approximately 10-15 micrometres; 10 minutes "flash-off".

c) 66253 with 57859 as a hardener, bright coating material on the basis of a solvent; provided in a layer thickness of approximately 40 micrometres; 10 minutes "flash off"; 45 minutes at 80 °C.

3) A two-layer-system of Herberts:

a) Nordic Green R 65349.7, a basic coating material on a water basis. Provided in a layer thickness of approximately 10-15 micrometres; 2 minutes "flash off"; 3 minutes at 70 °C; 2 minutes "flash off".

b) R 47761 with R 65430 as a hardener; a bright coating material on a solvent basis; provided in a layer thickness of approximately 30-40 micrometres; 10 minutes "flash off"; 40 minutes at 90 °C.

**Experiments to determine the lacquer bonding:**

1) Gt ("Gitterschnitt" )-test ("Cross hatch").

A hatch pattern is cut on the lacquered sheet by means of a special small knife. Readily adhering tape is firmly adhered on the said hatched lacquer layer. The adhesive tape is then pulled loose from the plate in one jerk. The lacquer bonding is evaluated according to 5 classes (Gt 0 to Gt 5) depending on the appearance of the hatched area. Gt O: no lacquer pulled loose from the substrate; Gt 5: more than 65% of the lacquer pulled loose from the check pattern.

2) Steam jet test

In this test hot water at high pressure is sprayed on the lacquered plate. The lacquer bonding is evaluated as "bad" (indicated by NOK) or "good" (indicated as OK). A cross is cut beforehand through the lacquer layers down to the substrate by means of a knife. The sample is fixed on a jig and a hot-water jet is sprayed against the cross at a constant pressure and at a constant temperature.

TABLE I

| Lacquer systems/Testing methods terminal | | | | | | | |
|---|---|---|---|---|---|---|---|
| | | AKZO | | | Wörwag | Herberts | |
| | Content COOH groups (meg/ kg) | Mn | Gt-test | Steam jet test (R)* | Steam jet test (R)* | Gt-test | Steam jet test (R)* |
| PBT-1 | 7 | 36800 | Gt0 | OK | OK | Gt0 | OK |
| PBT-2 | 15 | 38100 | Gt0 | OK | OK | Gt0 | OK |
| PBT-3 | 17 | 39400 | Gt0 | OK | OK | Gt0 | NOK |
| PBT-Verg.A | 52 | 36700 | Gt5 | NOK | NOK | Gt5 | NOK |
| PBT-4 | 7.5 | 41200 | Gt0 | OK | OK | Gt0 | OK |
| PBT-Verg.B | 42 | 44000 | Gt5 | NOK | NOK | Gt5 | NOK |

*R = conditions: 60 °C, 6000 k Pa, 15 cm, 1 minute
Gt 0, OK: good bonding
Gt 5, NOK: poor bonding

It appears from the above results that excellent results as regards the lacquer bonding are obtained with unmixed PBT according to the invention, both with lacquer on a water basis and with lacquer on a solvent basis.
It was furthermore found that the PBT materials according to the invention showed an excellent resistance to hydrolysis, which appeared from the melt volume index (MVI), determined after ageing at 120 °C and 300 kPa and a relative humidity of 100%. The MVI is determined according to ISO 1133 by melting the polymeric grains and placing a weight on them. As a result of the pressure of the weight the molten material flows through a capillary and the quantity of flown material per 10 minutes is measured. The MVI-values for PBT-Verg.A and for PBT-1 after 0, 4 and 8 hours, respectively, are compared hereinafter.

| MVI (250 °C/5 kg | PET-Verg.A | PBT-1 |
|---|---|---|
| after 0 hours | 23 | 23 |
| after 4 hours | 41 | 29 |
| after 8 hours | 57 | 32 |

**Claims**

1. Articles formed from a polybutylene teraphthalate having a content of terminal COOH groups of less than 30 meq/ kg and a number-averaged molecular weight (Mn), determined with respect to polystyrene as a standard, of at least 30,000 and comprising one or more layers of a lacquer coating.

**EP 0 639 601 B2**

**Patentansprüche**

1. Gegenstände geformt aus einem Polybutylenterephthalat mit einem Gehalt von ter-minalen COOH-Gruppen von weniger als 30 meq/kg und einem Zahlenmittel des Molekulargewichts (Mn), bestimmt mit Bezug auf Polystyrol als Standard, von wenigstens 30.000 und aufweisend eine odere mehrere Schichten eines Lacküberzugs.

**Revendications**

1. Articles formés à partir d'un poly(butylène téréphtalate) présentant une teneur en groupes COOH terminaux inférieure à 30 méq/kg et une masse moléculaire moyenne en nombre (Mn), déterminée par rapport au polystyrène pris comme étalon, d'au moins 30 000, et comprenant une ou plusieurs couche d'un revêtement de type laque.